# EUROPEAN PATENT SPECIFICATION

(11) **EP 1 254 878 B1**
(45) Date of publication and mention of the grant of the patent: **03.12.2014**
(21) Application number: 01124513.1
(22) Date of filing: 12.10.2001
(51) Int. Cl.: C05G 3/00, C05C 9/02

(54) **Method for making a highly-stable liquid nitrogenous fertilizer for controllably releasing nitrogen and the fertilizer made thereby**
Verfahren zur Herstellung eines stabilisierten Stickstoff enthaltenden Lösungsdüngemittels mit kontrollierter Stickstoffabgabe und so hergestelltes Düngemittel
Procédé de production d'un engrais azote ayant une forme liquide stabilisée à libération contrôlée de l'azote et engrais ainsi obtenu

(30) Priority: 26.04.2001 IT MI010877
(43) Date of publication of application: 06.11.2002
(73) Proprietor: Sadepan Chimica S.r.l., 46019 Viadana (IT)
(72) Inventor: Costa, Gianluca, 26040 Gussola (Cremona) (IT); Rizzi, Giuseppe, 46019 Viadana (Mantova) (IT)
(74) Representative: De Gregori, Antonella

(56) References cited:
- CA-A1- 2 282 246
- GB-A- 2 025 387
- US-A- 4 554 005
- US-A- 4 599 102
- US-A- 4 776 879
- US-A- 4 778 510
- US-A- 4 781 749
- US-A- 5 449 394
- US-A1- 2002 043 086

## Description

### BACKGROUND OF THE INVENTION

The present invention relates to a method for making a highly-stable liquid nitrogenous fertilizer, for controllably releasing Nitrogen, and the fertilizer made by said method.

As is known, a very important problem affecting agricultural Nitrogen containing fertilizer is that the nitrogen contents of said fertilizers are susceptible to be easily washed away because of rain water and the like, with a great loss of the fertilizer efficiency which, in a lot of cases, is flushed away and cannot perform its intended fertilizing function.

Moreover, the washed away nitrogen is transformed into nitric nitrogen, with consequent serious environmental problems.

As shown in a lot of pertinent documents, nitrogenous fertilizers are moreover negatively affected by a comparatively short storing stability, hindering a broad use of these fertilizers.

For example, such comparatively short storing stability affects also the product obtained according to the prior document US 5,449,394 disclosing a method of preparing controlled release, nitrogen plant food composition by condensingly reacting ammonia, urea and formaldehyde, comprising: a) admixing ammonia, urea and formaldehyde in a molecular ratio 1, 2 and 3, respectively in aqueous solution containing sufficient base buffering material to maintain a minimum pH of about 7; b) heating the admixture to a temperature of about 100°C, at a minimum pH of about 7 for a period of time between 30 and 300 minutes, until a condensation reaction between ammonia, urea and formaldehyde is substantially complete to form nonpolymeric liquid controlled release nitrogen plant food; c) evaporatingly concentrating the aqueous nitrogen plant food until its nitrogen content is between 20 and 30 percent; and d) cooling the concentrated aqueous nitrogen plant food to about room temperature before formation of polymers containing more than 3 urea moieties occurs.

### SUMMARY OF THE INVENTION

Accordingly, the aim of the present invention is to overcome the above mentioned drawbacks, by providing a method for making a highly-stable liquid nitrogenous fertilizer, for controllably releasing Nitrogen, which is designed to prevent Nitrogen from being washed away through the soil, while holding its Nitrogen releasing properties substantially unaltered.

Within the scope of the above mentioned aim, a main object of the present invention is to provide such a liquid nitrogenous fertilizer which does not have any phytotoxic effect at the leaf and root level and which is provided with a very high storing stability.

Another object of the present invention is to provide such a nitrogenous fertilizer making method which does not cause any polluting problems and which can be carried out by conventional available apparatus.

Yet another object of the present invention is to provide such a method for making a highly stable liquid nitrogenous fertilizer, for controllably releasing Nitrogen, which can be carried by using easily available products and which, moreover, is very competitive from a mere economic standpoint.

According to one aspect of the present invention, the above mentioned aim and objects, as well as yet other objects, which will become more apparent hereinafter, are achieved by a method for making a highly-stable liquid nitrogenous fertilizer for controllably releasing Nitrogen, characterized in that said method comprises the steps of mixing, in this order, an aqueous Formaldehyde solution with a formaldehyde concentration from 36% to 43% by weight, said formaldehyde solution being present in a percentage from 30% to 50% by weight with respect to the mixture, de-ironed water in a percentage from 0% to 5% by weight, a neutral or weakly alkaline buffer, Urea in a percentage from 35% to 60% by weight, an Ammonia solution with an ammonia concentration from 20% to 50% by weight, ammonia being present in a percentage from 5% to 20% by weight, heating the mixture to provide a fully clear mixture, holding said mixture to a temperature from 70°C to 110°C, preferably 85°C - 95°C for a time from 10 to 30 minutes, the reaction being carried out in an environment having a pH from 7 to 10 and cooling said mixture.

In alternative, the method for making a highly-stable liquid nitrogenous fertilizer for controllably releasing Nitrogen, is characterized in that said method comprises the step of successively mixing an Urea-Formaldehyde precondensate with a dry residue from 60% to 80% by weight and an Urea: Formaldehyde molar ratio from 1:4.0 to 7.0, said Urea-Formaldehyde precondensate being present in a percentage from 25% to 45% by weight with respect to the mixture, de-ironed water in a percentage from 0% to 5% by weight, a neutral or weakly alkaline buffer, Urea in a percentage from 35% to 60% by weight, an Ammonia solution with an ammonia concentration from 20% to 50% by weight, ammonia being present in a percentage from 5% to 20% by weight, heating to provide a clear mixture, holding the mixture to a temperature from 70°C to 110°C, preferably 85°C - 95°C for a time from 10 to 30 minutes, the reaction being carried out in an environment having a pH from 7 to 10 and cooling said mixture.

Further characteristics and advantages of the present invention will become more apparent from the following detailed disclosure of a method for making a highly-stable liquid nitrogenous fertilizer, for controllably releasing Nitrogen which method is based on a use of an aqueous Formaldehyde having a formaldehyde concentration from 36% to 43% by weight, which is used in a percentage from 30% to 50% by weight, preferably from 37% to 45% by weight.

Instead of said formaldehyde, it is also possible to use an Urea-Formaldehyde pre-condensate, usually called "Formurea", with a dry residue from 60 to 80% and an Urea:Formaldehyde molar ratio from 1:4.0 to 7.0, said formurea being present in a percentage from 25% to 45% by weight, preferably 32-38% by weight.

To one of the two above disclosed components, is added a de-ironed water, preferably a sweetened de-ironed water, in a percentage preferably from 0 to 5%, more preferably 2-4% by weight.

Moreover, it is provided to use a neutral or weakly alkaline buffer, having a pH of 7-10, designed for also operating as a stabilizing agent, which can comprise sodium or potassium salts of Carbonate, Bicarbonate, Phosphate, Acetate, Formate, Tetraborate, Sulphite, Disulphite or a solution of Hesamethylenetetramine.

The percentages of the above mentioned components can be changed depending on the different types of products to be obtained.

Successively, to the buffering and/or stabilizing agents, is added industrial use Urea, in bead form, in a percentage from 35 to 60%, preferably 39-47% by weight.

To the mixture is then added a solution of Ammonia, with an ammonia concentration from 20% to 50% by weight, in a percentage varying from 5% to 20%, preferably 8-15% by weight.

The mixture can be optionally further added with microelements for enhancing the product, such as: Magnesium, in the form of Magnesium Sulphate; Boron, such as Sodium Borate having any desired contents of B₂O₃ and water, or as Boron-ethanolamine; Zinc, such as Zinc Sulphate or Zn (NH₃)₂SO₄; Iron such as Iron Sulphate, Manganese such as Manganese Sulphate.

The thus obtained mixture is subjected to a so-called transparency process which is carried out by heating the mixture to a temperature from 70 to 110° C, preferably from 85 to 95°C, and for a time from 10 to 30 minutes, so as to provide a fully clear mixture or resin.

The reaction is stopped by cooling and the reaction product is supplied to a storing tank.

Optionally, before unloading the product, it can be added with microelements, under cool conditions.

The Urea:Formaldehyde:Ammonia molar ratios are usually of 2 to 10:1.5 to 8:1 and, preferably, 3.5 to 4.5:2.5to 3.5:1.

The obtained end product, which is nontoxic at the leaf and root level, has a very high storing stability within a broad temperature range and is optically clear.

The liquid nitrogenous fertilizer according to the present invention presents:
- a storing stability at -20°C of at least two months;
- a storing stability at +20°C of at least six months;
- a storing stability at + 50°C of at least three months.

Said fertilizer has a high storing stability even after bubbling a gas such as N₂ and CO₂ through said fertilizer.

The fertilizer according to the present invention can be mixed with Water in any mixing ratio and at any temperatures.

The fertilizer is clear at any temperature, it has a high mechanical strength under a centrifugal pump stress.

The fertilizer according to the present invention has a low viscosity from 5 to 50 mPa.s and preferably from 10 to 25 mPas.

More specifically, said product has Nitrogen concentration from 12% to 34% by weight, a P₂O₅ concentration from 0 to 3% by weight, a K₂O concentration from 0 to 5% by weight, and it can also contain several different microelements such as Boron, Magnesium, Iron, Zinc, Mangagese depending on the chemical agents added to the mixture.

By adding the above mentioned buffering agents, the reaction is usually carried out in a neutral or weakly alkaline environment, having a pH from 7 to 10.

Several examples have been performed as hereinbelow illustrated, related to a preparing of 1,000 Kg of product.

### Example No. 1 (not according the invention)

Into a steel reactor, having a size variable from 10,000 to 60,000 liters, including a stirring system, a heating and cooling system and a vacuum suction system, are loaded, under stirring, at atmospheric pressure and environment temperature, the following raw materials:

| | |
|---|---|
| 43% Formaldehyde | Kg 603.5 |
| Water | Kg 4.5 |
| K₂CO₃ | Kg 0.5 |
| Urea | Kg 519.2 |
| 24% NH₃ | Kg 208.3 |

CH₄N₂O/CH₂O/NH₃ molar ration = 2.94 : 2.94: 1.

By adding Urea, the mixture temperature is lowered, whereas, by adding NH₃, the liquid mixture surface starts to boil.

Then, the mixture is heated to boiling and the system is held under suction to remove 336 Kg water.

At the end of this step, the mixture is cooled to 30°C, and then it is supplied to the storing tank.

The end product has a Nitrogen concentration of 28% by weight.

### Example No. 2

Into a steel reactor, having a size varying from 10,000 to 60,000 liters, including a stirring system and a heating and cooling system, are loaded, under stirring at atmospheric pressure and environment temperature, the following raw materials:

| | |
|---|---|
| 70% Formurea | Kg 377.5 |
| NaHCO₃ | Kg 5.0 |
| Urea | Kg 465.5 |
| 24% NH₃ | Kg 152.0 |

CH₄N₂O/CH₂O/NH₃ molar ratio = 4.11: 3.10: 1.

The mixture is heated to 95°C for 10 minutes, then it is cooled and supplied to the storing tank.

The end pH varies from 8.0 to 10.0 and the Nitrogen concentration corresponds to 28% by weight.

### Example No. 3

Into a steel reactor, having a size variable from 10,000 to 60,000 liters, including a stirring system and a heating and cooling system, are loaded, under stirring, at atmospheric pressure and environment or room temperature, the following raw materials:

| | |
|---|---|
| 80% Formurea | Kg 350.9 |
| Water | Kg 41.1 |
| Sodiumtetraboratedecahydrate | Kg 8.7 |
| Urea | Kg 474.3 |
| 24% NH₃ | Kg 125.0 |

CH₄N₂O/CH₂O/NH₃ molar ratio = 5.25: 3.78: 1.

The mixture is heated to 100°C for 30 minutes, the it is cooled and supplied to the storing tank.

The end product has a Nitrogen concentration of 28% by weight of 28% and contains 0.1% Boron (concentration by weight).

As soluble Boron source it would be possible to also use the complex Boron-ethanolamine.

### Example No. 4 (not according the invention)

Into a steel reactor, having a size variable from 10,000 to 60,000 liters, including a stirring system, a heating and cooling system and a reflux condensing system, are loaded, under stirring at atmospheric pressure and room temperature, the following raw materials:

| | |
|---|---|
| 43% Formaldehyde | Kg 348.8 |
| Water | Kg 163.5 |
| Urea | Kg 393.4 |
| 24% NH₃ | Kg 60.0 |

CH₄N₂O/CH₂O/NH₃ molar ratio = 7.74: 5.90: 1.

The mixture is heated to boiling for 20 minutes, by refluxing the condensate to the reactor.

At the end of the above step, the mixture is cooled to about 30÷35°C, and are further added:

| | |
|---|---|
| ZnSO₄·7H₂O | Kg 11.0 |
| 24% NH₃ | Kg 23.3 |

CH₄N₂O/CH₂O/NH₃ molar ratio = 5.57/4.25/1.

Then, a stirring operation for a short time (10 minutes) is carried out, and then the stirred mixture is supplied to the storing tank.

The end product has a Nitrogen concentration of 20% by weight and contains 0.25% Zinc (concentration by weight).

### Example No. 5

Into a steel reactor, having a size variable from 10,000 to 60,000 liters, including a stirring system and a heating and cooling system, are loaded, under stirring at atmospheric pressure and room temperature, the following raw materials:

| | |
|---|---|
| 70% Formurea | Kg 339.7 |
| Water | Kg 33.1 |
| CH₃COONa | Kg 5.0 |
| Urea | Kg 497.2 |
| 24% NH₃ | Kg 125.0 |

CH₄N₂O/CH₂O/NH₃ molar ratio = 5.25: 3.41: 1.

The mixture is heated to 85°C for 30 minutes, and then it is cooled and supplied to the storing tank.

The end product has a Nitrogen concentration of 28% by weight and pH from 9.0 to 10.0. **Example No. 6** (not according the invention).

Into a steel reactor, having a size variable from 10,000 to 60,000 liters, including a stirring system and a heating and cooling system, are loaded, under stirring at atmospheric pressure and room temperature, the following raw materials:

| | |
|---|---|
| 80% Formurea | Kg 315.8 |
| Water | Kg 78.7 |
| NaHCO₃ | Kg 10.0 |
| Urea | Kg 491.3 |
| 24% NH₃ | Kg 104.2 |

CH₄N₂O/CH₂O/NH₃ molar ratio = 6.39: 4.08: 1.

The mixture is heated to 95° C for 15 minutes, then it is cooled and supplied to the storing tank. The end product has a Nitrogen concentration of 28% by weight and a pH from 8.0 to 9.5. **Example No. 7** (not according the invention).

Into a steel reactor, having a size variable from 10,000 to 60,000 liters, including a stirring system and a heating and cooling system and a reflux condensing system, are loaded, under stirring, at atmospheric pressure and room temperature, the following raw materials:

| | |
|---|---|
| 43% Formaldehyde | Kg 372.1 |
| Water | Kg 33.0 |
| Urea | Kg 530.9 |
| ZnSO₄·7H₂O | Kg 1.3 |
| 24% NH₃ | Kg 62.7 |

CH₄N₂O/CH₂O/NH₃ molar ratio = 10.0: 6.02: 1.

The mixture is heated to boiling and held for 15 minutes by refluxing the condensate to the reactor.

The end product has a Nitrogen concentration of 26% by weight and contains 0.03% Zinc (concentration by weight).

### Example No. 8 (not according the invention)

Into a steel reactor, having a size variable from 10,000 to 60,000 liters, including a stirring system and a heating and cooling system, are loaded, under stirring, at atmospheric pressure and environment temperature, the following raw materials:

| | |
|---|---|
| 70% Formurea | Kg 264.1 |
| Water | Kg 234.9 |
| Urea | Kg 409.0 |
| 24% NH₃ | Kg 41.6 |

CH₄N₂O/CH₂O/NH₃ molar ratio = 12.86: 7.93: 1.

The mixture is heated to boiling, then immediately cooled down to 30 ÷ 35°C and being further added with:

| | |
|---|---|
| FeSO₄·7H₂O | Kg 50.4 |

Then, the mixture is further stirred for a short time (5 minutes), and then is supplied to the storing tank.

The end product has a nitrogen concentration of 22% by weight and contains 1% Iron (concentration by weight).

### Example No. 9

Into a steel reactor, having a size variable from 10,000 to 60,000 liters, including a stirring system and a heating and cooling system, are loaded, under stirring, at atmospheric pressure and room temperature, the following raw materials:

| | |
|---|---|
| 80% Formurea | Kg 315.8 |
| 40% Hesamethylentetramine | Kg 49.2 |
| Urea | Kg 510.0 |
| 24% NH₃ | Kg 125.2 |

CH₄N₂O/CH₂O/NH₃ molar ratio = 5.50: 3.40: 1.

The mixture is heated to 90°C for 10 minutes, then it is cooled and supplied to the storing tank.

The end product has a Nitrogen concentration of 30% by weight and a pH from 7.5 to 9.0.

### Example No. 10

Into a steel reactor, having a size variable from 10,000 to 60,000 liters, including a stirring system and a heating and cooling system, are loaded, under stirring, at atmospheric pressure and room temperature, the following raw materials:

| | |
|---|---|
| 70% Formurea | Kg 301.9 |
| K₂HPO₄ | Kg 37.8 |
| Urea | Kg 556.1 |
| 24% NH₃ | Kg 104.2 |

CH₄N₂O/CH₂O/NH₃ molar ratio = 6.88: 4.08: 1.

The mixture is heated to 95°C for 20 minutes and then cooled.

The end product has a Nitrogen concentration of 28% by weight, a P₂O₅ concentration of 1.5%by weight and a K20 concentration of 2.0% by weight.

From the above disclosure it should be apparent that the invention fully achieves the intended aim and objects.

In fact, an end product having the desired properties and providing optimum agronomical results has been provided.

Moreover, the above disclosed methods are non polluting methods, and provide a clear liquid nitrogenous product, for controllably releasing Nitrogen, which is not phytotoxic at the leaf and root level, and has a very high storing stability.

## Claims

1. A method for making a highly-stable liquid nitrogenous fertilizer for controllably releasing Nitrogen, **characterized in that** said method comprises the steps of mixing, in this order, an aqueous Formaldehyde solution with a formaldehyde concentration from 36% to 43% by weight, said formaldehyde solution being present in a percentage from 30% to 50% by weight with respect to the mixture, de-ironed water in a percentage from 0% to 5% by weight, a neutral or weakly alkaline buffer, Urea in a percentage from 35% to 60% by weight, an Ammonia solution with an ammonia concentration from 20% to 50% by weight, ammonia being present in a percentage from 5% to 20% by weight, heating the mixture to provide a fully clear mixture, holding said mixture to a temperature from 70°C to 110°C, preferably 85°C - 95°C for a time from 10 to 30 minutes, the reaction being carried out in an environment having a pH from 7 to 10 and cooling said mixture.

2. A method for making a highly-stable liquid nitrogenous fertilizer for controllably releasing Nitrogen, **characterized in that** said method comprises the step of successively mixing an Urea-Formaldehyde precondensate with a dry residue from 60% to 80% by weight and an Urea:Formaldehyde molar ration from 1:4.0-7.0, said Urea-Formaldehyde precondensate being present in a percentage from 25% to 45% by weight with respect to the mixture, de-ironed water in a percentage from 0% to 5% by weight, a neutral or weakly alkaline buffer, Urea in a percentage from 35% to 60% by weight, an Ammonia solution with an ammonia concentration from 20% to 50% by weight, ammonia being present in a percentage from 5% to 20% by weight, heating to provide a clear mixture, holding the mixture to a temperature from 70°C to 110°C, preferably 85°C - 95°C for a time from 10 to 30 minutes, the reaction being carried out in an environment having a pH from 7 to 10 and cooling said mixture.

3. A method, according to claim 1, **characterized in that** said aqueous Formaldehyde solution is included in said mixture in a percentage from 37% to 45% by weight.

4. A method, according to claim 2, **characterized in that** said Urea-Formaldehyde precondensate is included in said mixture in a percentage from 32% to 38% by weight.

5. A method, according to one or more of the preceding claims, **characterized in that** said Urea is included in said mixture in a percentage from 39% to 47% by weight.

6. A method, according to one or more of the preceding claims, **characterized in that** said Ammonia is included in said mixture in a percentage from 8% to 15% by weight.

7. A method, according to one or more of the preceding claims, **characterized in that** said Water is included in said mixture in a percentage of 2%-4% by weight.

8. A method, according to one or more of the preceding claims, **characterized in that** said neutral or weakly alkaline buffer, having a pH from 7 to 10, comprises sodium or potassium salts of Carbonate, Bicarbonate, Phosphate, Acetate, Formate, Tetraborate, Sulphite, Disulphite or solution Hesamethylentetramine.

9. A method, according to one or more of the preceding claims, **characterized in that** said method further comprises, after adding Ammonia, the step of adding to said mixture microelements, said microelements comprising Magnesium, such as Magnesium Sulphate, Boron, such as Sodium Borate with a different contents of B₂O₃ and hydrating water or in the form of Boron-Ethanolamine, Zinc, such as Zinc Sulphate or Zn(NH₃)₂SO₄, Iron such as Iron Sulphate.

10. A liquid nitrogenous fertilizer, **characterized in that** said fertilizer comprises a Nitrogen concentration from 12% to 34% by weight, a P₂O₅ concentration from 0 to 3%by weight, a K₂O concentration from 0 to 5% by weight, obtainable according to the method of any of the previous claims, said fertilizer in a range from -20°C to +50°C having
- a storing stability at -20°C of at least two months;
- a storing stability at +20°C of at least six months;
- a storing stability at + 50°C of at least three months.

11. A fertilizer, according to the preceding claim, **characterized in that** said fertilizer comprises microelements such as Boron, Magnesium, Iron, Zinc and Mangagese.

12. A fertilizer, according to Claims 10 to 11, **characterized in that** said fertilizer has a high storing stability even after bubbling a gas such as N₂ and CO₂ through said fertilizer.

13. A fertilizer, according to Claims 10 to 12, **characterized in that** said fertilizer is clear at any temperatures.

14. A fertilizer, according to Claims 10 to 13, **characterized in that** said fertilizer has a viscosity from 5 to 50 mPa.s and preferably from 10 to 25 mPas.

15. A fertilizer, according to Claims 10 to 14, **characterized in that** said fertilizer has a low toxicity at a leaf and root level.

## Patentansprüche

1. Verfahren zur Herstellung eines hochstabilen flüssigen Stickstoffdüngers zur steuerbaren Freisetzung von Stickstoff, **dadurch gekennzeichnet, dass** dieses Verfahren die Schritte des Mischens, in dieser Reihenfolge, einer wässrigen Formaldehydlösung mit einer Formaldehydkonzentration von 36 bis 43 Gew.-%, wobei diese Formaldehydlösung mit einem Anteil von 30 bis 50 Gew.-% bezogen auf das Gemisch vorliegt, von enteisentem Wasser mit einem Anteil von 0 bis 5 Gew.-%, einem neutralen oder schwach alkalischen Puffer, Harnstoff mit einem Anteil von 35 bis 60 Gew.-% und einer Ammoniaklösung mit einer Ammoniakkonzentration von 20 bis 50 Gew.-%, wobei das Ammoniak mit einem Anteil von 5 bis 20 Gew.-% vorliegt, des Erhitzens des Gemischs zum Bereitstellen eines vollkommen klaren Gemischs, des Haltens dieses Gemischs auf einer Temperatur von 70°C bis 110°C, vorzugsweise 85°C bis 95°C, für eine Zeit von 10 bis 30 Minuten, wobei die Reaktion in einer Umgebung mit einem pH-Wert von 7 bis 10 durchgeführt wird, und des Abkühlens des Gemischs umfasst.

2. Verfahren zur Herstellung eines hochstabilen flüssigen Stickstoffdüngers zur steuerbaren Freisetzung von Stickstoff, **dadurch gekennzeichnet, dass** dieses Verfahren den Schritt des aufeinanderfolgenden Mischens eines Harnstoff-Formaldehyd-Präkondensats mit einem Trockenrest von 60 bis 80 Gew.-% und einem molaren Harnstoff-Formaldehyd-Verhältnis von 1 zu 4,0 bis 7,0, wobei dieses Harnstoff-Formaldehyd-Präkondensat mit einem Anteil von 25 bis 45 Gew.-% bezogen auf das Gemisch vorliegt, von enteisentem Wasser mit einem Anteil von 0 bis 5 Ges.-%, einem neutralen oder schwach alkalischen Puffer, Harnstoff mit einem Anteil von 35 bis 60 Gew.-% und einer Ammoniaklösung mit einer Ammoniakkonzentration von 20 bis 50 Gew.-%, wobei das Ammoniak mit einem Anteil von 5 bis 20 Gew.-% vorliegt, Erhitzen zum Bereitstellen eines klaren Gemischs, Halten des Gemischs auf einer Temperatur von 70°C bis 110°C, vorzugsweise 85°C bis 95°C, für eine Zeit von 10 bis 30 Minuten, wobei die Reaktion in einer Umgebung mit einem pH-Wert von 7 bis 10 durchgeführt wird, und Abkühlen des Gemischs umfasst.

3. Verfahren nach Anspruch 1, **dadurch gekennzeichnet, dass** die wässrige Formaldehydlösung in diesem Gemisch mit einem Anteil von 37 bis 45 Gew.-% enthalten ist.

4. Verfahren nach Anspruch 2, **dadurch gekennzeichnet, dass** das Harnstoff-Formaldehyd-Präkondensat in diesem Gemisch mit einem Anteil von 32 bis 38 Gew.-% enthalten ist.

5. Verfahren nach einem oder mehreren der vorhergehenden Ansprüche, **dadurch gekennzeichnet, dass** der Harnstoff in dem Gemisch mit einem Anteil von 39 bis 47 Gew.-% enthalten ist.

6. Verfahren nach einem oder mehreren der vorhergehenden Ansprüche, **dadurch gekennzeichnet, dass** das Ammoniak in dem Gemisch mit einem Anteil von 8 bis 15 Gew.-% enthalten ist.

7. Verfahren nach einem oder mehreren der vorhergehenden Ansprüche, **dadurch gekennzeichnet, dass** das Wasser in dem Gemisch mit einem Anteil von 2 bis 4 Gew.-% enthalten ist.

8. Verfahren nach einem oder mehreren der vorhergehenden Ansprüche, **dadurch gekennzeichnet, dass** der neutrale oder schwach alkalische Puffer mit einem pH-Wert von 7 bis 10 Natrium- oder Kaliumsalze von Carbonat, Bicarbonat, Phosphat, Acetat, Ameisensäure, Tetraborat, Sulfit, Disulfit oder Hexamethylentetraminlösung umfasst.

9. Verfahren nach einem oder mehreren der vorhergehenden Ansprüche, **dadurch gekennzeichnet, dass** dieses Verfahren ferner, nach der Zugabe des Ammoniaks, den Schritt des Zugebens von Mikroelementen zum Gemisch umfasst, wobei diese Mikroelemente Magnesium, wie z.B. Magnesiumsulfat, Bor, wie z.B. Natriumborat mit einem unterschiedlichen Gehalt an B₂O₃ und hydratisierendem Wasser oder in der Form von Bor-Ethanolamin, Zink, wie z.B. Zinksulfat oder Zn(NH₃)₂SO₄, Eisen, wie z.B. Eisensulfat, umfassen.

10. Flüssiger Stickstoffdünger, **dadurch gekennzeichnet, dass** der Dünger eine Stickstoffkonzentration von 12 bis 34 Gew.-%, eine P₂O₅-Konzentration von 0 bis 3 Gew.-%, eine K₂O-Konzentration von 0 bis 5 Gew.-% umfasst, die gemäß dem Verfahren nach einem der vorhergehenden Ansprüche erhalten werden können,
wobei dieser Dünger in einem Bereich von -20°C bis +50°C Folgendes aufweist:
- eine Lagerstabilität bei -20°C von mindestens zwei Monaten;
- eine Lagerstabilität bei +20°C von mindestens sechs Monaten;
- eine Lagerstabilität bei +50°C von mindestens drei Monaten.

11. Dünger nach dem vorhergehenden Anspruch, **dadurch gekennzeichnet, dass** dieser Dünger Mikroelemente wie Bor, Magnesium, Eisen, Zink und Mangan umfasst.

12. Dünger nach Anspruch 10 bis 11, **dadurch gekennzeichnet, dass** dieser Dünger auch nach Sprudeln eines Gases wie z.B. N₂ und CO₂ durch diesen Dünger eine hohe Lagerstabilität aufweist.

13. Dünger nach Anspruch 10 bis 12, **dadurch gekennzeichnet, dass** dieser Dünger bei jeder Temperatur klar ist.

14. Dünger nach Anspruch 10 bis 13, **dadurch gekennzeichnet, dass** dieser Dünger eine Viskosität von 5 bis 50 mPa·s und vorzugsweise von 10 bis 25 mPa·s aufweist.

15. Dünger nach Anspruch 10 bis 14, **dadurch gekennzeichnet, dass** dieser Dünger auf einer Blatt- und Wurzelebene eine geringe Toxizität aufweist.

## Revendications

1. Un procédé de production d'un engrais azoté liquide extrêmement stable pour libérer de l'azote de manière contrôlable, **caractérisé en ce que** ledit procédé comprend les étapes consistant à mélanger, dans cet ordre, une solution aqueuse de formaldéhyde avec une concentration de formaldéhyde de 36% à 43% en poids, ladite solution de formaldéhyde étant présente dans un pourcentage de 30% à 50% en poids par rapport au mélange, de l'eau déferrée dans un pourcentage de 0% à 5% en poids, un tampon neutre ou faiblement alcalin, de l'urée dans un pourcentage de 35% à 60% en poids, une solution d'ammoniaque avec une concentration d'ammoniaque de 20% à 50% en poids, l'ammoniaque étant présent dans un pourcentage de 5% à 20% en poids, chauffer le mélange pour fournir un mélange totalement limpide, maintenir ledit mélange à une température de 70°C à 110°C, de préférence 85°C à 95°C, pendant un temps de 10 à 30 minutes, la réaction étant exécutée dans un environnement ayant un pH de 7 à 10, et refroidir ledit mélange.

2. Un procédé de production d'un engrais azoté liquide extrêmement stable pour libérer de l'azote de manière contrôlable, **caractérisé en ce que** ledit procédé comprend l'étape consistant à mélanger successivement une urée-formaldéhyde pré-condensée avec un résidu sec de 60% à 80% en poids et un rapport molaire urée/formaldéhyde de 1/4,0-7,0, ladite urée-formaldéhyde pré-condensée étant présent dans un pourcentage de 25% à 45% en poids par rapport au mélange, de l'eau déferrée dans un pourcentage de 0% à 5% en poids, un tampon neutre ou faiblement alcalin, de l'urée dans un pourcentage de 35% à 60% en poids, une solution d'ammoniaque avec une concentration d'ammoniaque de 20% à 50% en poids, l'ammoniaque étant présent dans un pourcentage de 5% à 20% en poids, chauffer pour fournir un mélange totalement limpide, maintenir le mélange à une température de 70°C à 110°C, de préférence 85°C à 95°C, pendant un temps de 10 à 30 minutes, la réaction étant exécutée dans un environnement ayant un pH de 7 à 10, et refroidir ledit mélange.

3. Un procédé selon la revendication 1, **caractérisé en ce que** ladite solution aqueuse de formaldéhyde est comprise dans ledit mélange dans un pourcentage de 37% à 45% en poids.

4. Un procédé selon la revendication 2, **caractérisé en ce que** ladite urée-formaldéhyde pré-condensée est comprise dans ledit mélange dans un pourcentage de 32% à 38% en poids.

5. Un procédé selon une ou plusieurs des revendications précédentes, **caractérisé en ce que** ladite urée est comprise dans ledit mélange dans un pourcentage de 39% à 47% en poids.

6. Un procédé selon une ou plusieurs des revendications précédentes, **caractérisé en ce que** ladite ammoniaque est comprise dans ledit mélange dans un pourcentage de 8% à 15% en poids.

7. Un procédé selon une ou plusieurs des revendications précédentes, **caractérisé en ce que** ladite eau est comprise dans ledit mélange dans un pourcentage de 2%-4% en poids.

8. Un procédé selon une ou plusieurs des revendications précédentes, **caractérisé en ce que** ledit tampon neutre ou faiblement alcalin, ayant un pH de 7 à 10, comprend des sels de sodium ou de potassium de carbonate, bicarbonate, phosphate, acétate, formate, tétraborate, sulfite, disulfite ou hexaméthylènetétramine en solution.

9. Un procédé selon une ou plusieurs des revendications précédentes, **caractérisé en ce que** ledit procédé comprend en outre, après l'ajout d'ammoniaque, l'étape consistant à ajouter audit mélange des micro-éléments, lesdits micro-éléments comprenant le magnésium, comme du sulfate de magnésium, le bore, comme le borate de sodium avec une teneur différente en B₂O₃ et eau d'hydratation ou sous la forme de bore-éthanolamine, le zinc, comme le sulfate de zinc ou Zn(NH₃)₂SO₄, le fer comme le sulfate de fer.

10. Un engrais azoté liquide, **caractérisé en ce que** ledit engrais comprend une concentration d'azote de 12% à 34% en poids, une concentration de P₂O₅ de 0 à 3% en poids, une concentration de K₂O de 0 à 5% en poids, pouvant être obtenu suivant le procédé selon l'une quelconque des revendications précédentes,
ledit engrais dans une plage de -20°C à +50°C ayant
- une stabilité au stockage à -20°C d'au moins deux mois;
- une stabilité au stockage à +20°C d'au moins six mois;
- une stabilité au stockage à +50°C d'au moins trois mois.

11. Un engrais selon la revendication précédente, **caractérisé en ce que** ledit engrais comprend des micro-éléments tels que le bore, le magnésium, le fer, le zinc et le manganèse.

12. Un engrais selon les revendications 10 à 11, **caractérisé en ce que** ledit engrais a une haute stabilité au stockage même après insufflage d'un gaz tel que N₂ et CO₂ à travers ledit engrais.

13. Un engrais selon les revendications 10 à 12, **caractérisé en ce que** ledit engrais est limpide à n'importe quelles températures.

14. Un engrais selon les revendications 10 à 13, **caractérisé en ce que** ledit engrais a une viscosité de 5 à 50 mPa.s et de préférence de 10 à 25 mPa.s.

15. Un engrais selon les revendications 10 à 14, **caractérisé en ce que** ledit engrais a une basse toxicité à un niveau des feuilles ou des racines.
